# EUROPEAN PATENT SPECIFICATION

(11) **EP 1 838 054 B1**
(45) Date of publication and mention of the grant of the patent: **27.05.2009**
(21) Application number: 06300247.1
(22) Date of filing: 20.03.2006
(51) Int. Cl.: H04L 12/56

(54) **Method of hitless radio protection switching over ethernet and a system for carrying out the method**
Verfahren zum nahtlosen Umschalten von Funkverbindungen über Ethernet und ein System zum Durchführen des Verfahrens
Procédé pour la commutation de protection de façon continue pour des lien à radio sur Ethernet et et système pour sa mise en oeuvre

(43) Date of publication of application: 26.09.2007
(73) Proprietor: Alcatel Lucent, 75008 Paris (FR)
(72) Inventor: Gerosa, Marzio, 20038, Seregno (Milano) (IT); Blondel, Thomas, 20059, Vimercate (Milano) (IT); Mazzurana, Glorgio Claudio, 20059, Vimercate(Milano) (IT)
(74) Representative: Shamsaei Far, Hassan

(56) References cited:
- US-A1- 2003 076 853
- US-A1- 2004 264 087
- US-B1- 6 985 451

## Description

The present invention relates to radio protection switching in digital radio communication where connection is made between an indoor unit and an outdoor unit. In particular the invention relates to performing radio protection switching in a hitless manner when said connection is made over Ethernet.

### BACKGROUND OF THE INVENTION

In general terms, radio protection switching refers to switching from a faulty or low quality data flow to another data flow which is not faulty or presents better quality as compared to the other data flow. This is basically done by using at least two data flows transmitted over two different radio links under same conditions and carrying the same data information. The two transmissions may be done for example by frequency diversity technique or space diversity technique, both techniques being known in the related art. In this manner, when one of the data flows presents a faulty or low quality condition, said failure is detected and switching is made to the non-faulty or better quality dataflow. This capability increases the overall reliability performance in the transmission system.

However while the switching from a faulty to a non-faulty data flow increases system reliability, the switching action itself may cause interruption in the communication. In order to avoid, as much as possible, such interruption it is desirable that the switching is done in a hitless manner. By hitless switching it is intended to refer to the possibility of switching between a primary data flow and a secondary, or back-up, data flow in such a manner that frame synchronization is not lost, thereby ensuring continuity in the communication. In radio communications it may occur that the user is located inside a building and therefore the communication needs to be directed from an indoor unit (hereinafter referred to as IDU) to an outdoor unit (hereinafter referred to as ODU) which is in charge of outputting the signals by means of transmission by radio through an antenna. This type of radio station configuration is generally referred to as Split Mount configuration which is the configuration the invention is concerned with.

In the so-called 1+1 configuration, an IDU is usually connected to two ODUs, while in an N+1 configuration an IDU is connected to N+1 ODUs.

In the following, for maintaining simplicity of description, reference is made to a 1+1 configuration, however it is to be understood that similar discussions are applicable to N+1 configurations.

When the communication is made through radio transmission, the signals may become subject to fading, multipath or other degrading phenomena. Therefore, each of the two ODUs may receive the incoming signal in a different timing. In addition the latency inserted by the digital circuitry of the two different ODUs may be different with each other as their status is not usually aligned thus causing an additional degrading factor.

For the sake of this description, it is considered that two signals are perfectly aligned if the signals received from each of the two UDOs contain the same information (or data) at the same time.

In conventional Split Mount configurations the IDU/ODU connection is based on a Constant Bit Rate (CBR) signal, which should be the same CBR corresponding to the signal received from the air. Therefore, in such cases, in order to perform hitless switching, the task of recovering the alignment between the CBR corresponding to the signals coming from the two ODUs is a major issue to be considered.

It is therefore desired to provide a hitless radio protection switching method and system that would provide an effective solution to the above problem.

US 2003/0076853 discloses a terminal apparatus for providing wireless point-to-multipoint communication. The apparatus includes a plurality of outdoor units that are configured to support simultaneously a plurality of channels. Additionally, the apparatus includes an indoor unit that is coupled to the plurality of outdoor units and is configured to receive a signal from a hub terminal over a wireless link.

US 6,985,451 discloses a method and apparatus for baseband transmission between a top flor unit and an outdoor unit in a terminal for a wireless metropolitan area network. A terminal for a wireless link in a metropolitan area network includes an extender device for receiving data packets from a computer network coupled to the extender device and for forwarding the data packets, and a broadcast device coupled to the extender device for receiving the data packets from the extender device according to baseband transmission and having a wireless transceiver for communicating the data packets over the wireless link.

### DESCRIPTION OF THE INVENTION

The solution of the invention is based on providing connection between the IDU and the ODU using Ethernet interface. This is done, for example by using a physical link such as a twisted pair cable or fiber based on known specifications such as for example 1000 Base T for Gigabit Ethernet connections. By using Ethernet as interface, the IDU and the ODU(s) communicate with each other using standard Ethernet packets. Ethernet is a widely used local area network architecture the specification of which has been defined under IEEE Standard 802.3.

In this manner (in a 1+1 configuration) the IDU receives two signals in the form of data flows, one from each ODU, and selects the signal which presents better quality, while the connection is made using an Ethernet interface. If there is a need to switch from one signal to the other, for example in case of failure in the signal being used, the IDU performs the switching to the other signal in a hitless manner. In order to perform hitless switching, the two signals need to be perfectly aligned.

This requirement, *i.e*. recovering alignment between the data flows coming from the two ODU, is in fact a complicated task due to the fact that Ethernet interfaces are in principle not designed for maintaining synchronism along the signal path.

Thus as the two signals are not received in a synchronous manner at the ODUs, they will reach the IDU also in a non-aligned mode. Therefore, due to this lack of alignment, hitless switching cannot be performed.

According to the invention, each air frame (air frame refers to a frame to be transmitted or received over the radio link) is processed in the IDU in following manner:

In transmission, the air frame is generated in the IDU, then the fame is fragmented and each fragment is numbered. The numbered fragments are sent to both ODUs as payload in corresponding standard Ethernet packets. Next, each ODU terminates the packets and the payload is sent to a buffer which is in charge of storing the signals to be transmitted until a time at which the buffer is read and next the signals are transmitted. The reading of the buffer is done based on a clock locked to the bit rate of the original air frame. In this manner, the constant bit rate, and thus synchronization, is maintained for transmission of the signals from both ODUs.

In reception, basically the reverse operation is performed. The air frame received is fragmented at each ODU and each block of fragmented signal is numbered. The numbered fragments are inserted in the payload of a standard Ethernet packet and the packets are then sent to the IDU. Upon receiving the packets, in two data flows, the IDU keeps them aligned using the numbering of the fragments as reference. In this manner, the selection may be made from one or the other data flow received from the ODUs and due to their alignment already ensured by the numbering of the fragments, hitless switching may be easily performed.

Accordingly, one object of the present invention is that providing a method of protection switching in a radio communication system, the system having an indoor unit and at least two outdoor units, the indoor unit and the at least two outdoor units being adapted for using constant bit rate signals said constant bit rate signals having frames, the indoor unit communicating with each of the at least two outdoor units using Ethernet transmission, **characterized in that** the Ethernet transmission is made using Ethernet packets, each of the Ethernet packets containing a numbered fragment of one of the frames of the constant bit rate signal, and in that protection switching is performed based on an alignment of Ethernet packets using the numbered fragments. Another object of the present invention is that of providing a system of protection switching in a radio communication system, the system having an indoor unit and at least two outdoor units, the indoor unit and the at least two outdoor units being adapted for using constant bit rate signals, said constant bit rate signals having frames, and the indoor unit being connected to each of the at least two outdoor units using an Ethernet interface for performing an Ethernet transmission, **characterized in that** the Ethernet transmission comprises Ethernet packets, each of said Ethernet packets containing a numbered fragment of one of the frames of the constant bit rate signal, and in that the system comprises an aligner for aligning the Ethernet packets using the numbered fragments and a switch adapted for switching based on the alignment.

These and further advantages of the present invention are explained in more detail in the following description as well as in the claims with the aid of the accompanying drawings.

### BRIEF DESCRIPTION OF THE DRAWINGS

Figure 1 schematic block diagram representation of an exemplary circuit arrangement for passing CBR signal through an Ethernet interface.
Figure 2 is a schematic block diagram representation of an exemplary indoor unit suitable for use in accordance to the present invention.
Figure 3 is a schematic block diagram representation of fragmenting and numbering procedure of a constant bit rate signal into Ethernet packets according to the present invention.
Figure 4 is a schematic block diagram representation of an exemplary outdoor unit suitable for use in accordance to the present invention.
Figure 5 is a schematic block diagram representation of an exemplary combination of indoor units and outdoor units suitable for use in accordance to the present invention.

### EXAMPLE OF A PREFERRED EMBODIMENT

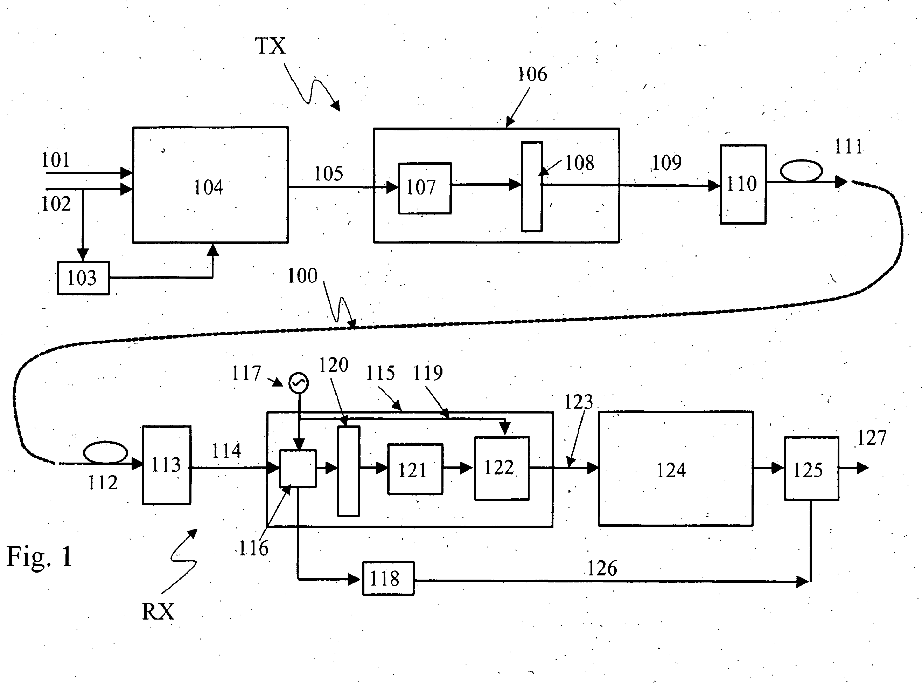

In figure 1 an exemplary block diagram of a system for transmitting/receiving a constant bit rate signal through an Ethernet interface is shown representing only those parts of the system which are considered helpful for a better understanding of the invention, other parts not shown and known by a person skilled in the related art being considered not relevant for this purpose. In this figure, the upper line of elements shown by the general reference sign TX are related to transmission, and the lower line of elements, shown by the general reference sign RX are related to reception.

Thus in transmission stage TX, an input signal 101 is shown which is assumed to represent a constant bit rate signal. The signal has an original clock rate, shown by arrow 102. The CBR signal is thus fed into a packager 104. The packager 104 is in charge of breaking the CBR signals into fragments and forming standard Ethernet packets corresponding to each fragment.

A CBR signal is a stream of data bits which travel at a constant rate. The CBR signal is then broken (or divided) into fragments. Then a standard Ethernet header is added to each respective fragment. Using the fragment obtained together with the associated Ethernet header, a standard Ethernet packet may be obtained in which the fragment occupies the payload part of the Ethernet packet. Additional characters or symbols, as conventionally needed in order to complete the standard Ethernet packet, for example a frame check sequence for controlling errors are also included in an appropriate part of the Ethernet packet.

A typical component for performing the packaging operation may be any digital programmable device such as for example the so-called Field Programmable Gate Array (FPGA) or Electrically Programmable Logical Device (EPLD).

Once the Ethernet packets are formed by the packager 104, they are output from the latter. The output signal 105 is clocked at a clock rate which is locked to the original clock rate of the CBR signal. In order to achieve this, the original clock rate 102 of the CBR signal is fed to a PLL 103. The PLL 103 uses this bit rate in order to generate a clock signal which is then used as clock for the output signal 105. In this manner, the CBR signal, structured into standard Ethernet packets is suitable for passing through the rest of the elements of transmission while at the same time it maintains a clock rate based on the original clock rate of the CBR.

Next the packets pass through an Ethernet interface unit 106 which may be a conventional unit such as the so-called PHY transmit device (PHY referring to the fact that the interface is related to the physical layer in the OSI layer definition). The interface unit 106 may comprise a coder 107 in order to code the received packets according to a suitable line code, for example the 8b/10b coding for a Gigabit Ethernet application. The interface unit 106 may also comprise a parallel input-serial output (PISO) device 108 in order to generate a serial signal 109 to be output from the interface unit 106. The output signal 109 is then fed to another conventional Ethernet interface device 110 such as the so-called Line Interface Unit (LIU) which in case of use in optical Gigabit Ethernet application may be a Small Form-Factor Pluggable (SFP) which is an optical interface in the form of a transceiver. The output signal 111 thus generated is finally transmitted through the transmission line 100 to the destination point.

In reception RX, at the destination point the signal 111 is received at an input port of a conventional Ethernet LIU device 113 such an SFP (in case of an optical Gigabit Ethernet application) as described above (it is to be noted that LIUs may operate bi-directionally) and a serial interface signal 114 is output from the latter and fed into a second conventional Ethernet interface unit 115 which in this case may be a PHY receive device, also known in the art. In the second interface unit 115, the clock of the received signal is recovered by a clock data recovery device 116. The recovered clock is then fed into a PLL 118, the use of which is described further below.

On the other hand, the clock data recovery device 116 uses a reference clock 117 in order to clock the output of the interface unit 115 as shown by arrow 119.

The serial signal output from the clock data recovery device 116 is fed into a serial input - parallel output (SIPO) device 120 which generates a parallel signal of ten bits to be input into a decoder 121 which is in charge of decoding the received signals, according to a suitable line code, for example the 8b/10b coding for a Gigabit Ethernet application.

The resulting signal is fed into a first input - first output (FIFO) unit 122 which then send the packets 123 to a de-packager 124.

The de-packager 124 is in charge of breaking the Ethernet packets received and eliminating the Ethernet header associated to each packet thus recovering the fragments of the original CBR signal.

Here also, in a similar manner as discussed in relation to the packager, a typical component for performing the de-packaging operation may be any digital programmable device such as for example the so-called Field Programmable Gate Array (FPGA) or Electrically Programmable Logical Device (EPLD).

Once the fragments are available, it is needed to assemble the fragments back together in order to reconstruct the CBR signal. In order to do this, the fragments obtained are stored in an elastic memory 125 such as a buffer. The fragments are then read from the buffer at a rate triggered by the PLL 118 which is sent to the buffer as shown by arrow 126. As mentioned above, the PLL 118 is locked at the nominal frequency of the original clock rate of the CBR.

The resulting signal 127 is thus a CBR signal duly recovered based on the original clock rate of the input CBR 101.

The above description therefore explains how the recovery of the CBR is achieved when it is passes through Ethernet devices.

### INDOOR UNIT (IDU)

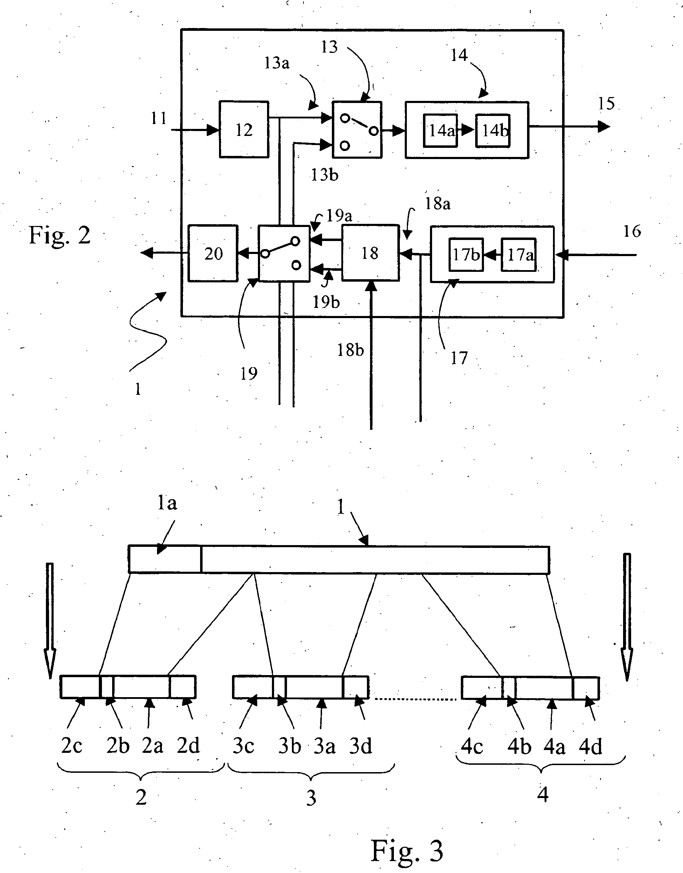

In figure 2 an exemplary block diagram of an IDU, 1, is shown representing only those parts of the IDU which are considered helpful for a better understanding of the invention, other parts not shown being considered not relevant for this purpose. In this figure, the upper line of elements are related to transmission from the IDU and the lower line of elements are related to reception at the IDU.

Thus in transmission stage, reference numeral 11 represents an input port through which a signal to be transmitted is input, into a packager 12. The main function of the packager is as described above in relation to figure 1 (cf. 104).

The CBR signal is in principle structured into frames within the signal to be transmitted by radio. A structure of such a frame may be considered as being of N bits long traveling at a rate of K Bps, thus the overall signal is adapted for traveling at a frame rate of M frames per second wherein M=K/N. Therefore the CBR flow, in particular the transmission air frame, is clocked at a predetermined bit rate which for the sake of easy understanding of the description, will be referred to as transmission original clock.

On the other hand, the Ethernet packets need to be clocked at a predetermined bit rate. This bit rate may be chosen at any convenient value.

Therefore, the Ethernet clock used in transmission is locked to the transmission original clock as already discussed in relation to figure 1.

The packager 12 also serves the function of numbering the fragments. The procedure for numbering the fragments is schematically shown in figure 3.

As shown in this figure, an air frame 1 being a CBR signal is represented by a single block 1, however it is understood that this block contains a stream of data bits which travel at a constant rate. Part of this signal 1 a is occupied by the frame alignment word. The CBR signal 1 is then broken (or divided) into fragments 2a, 3a, 4a. The fragments are then numbered respectively as identified in the figure by reference numerals 2b, 3b, 4b. Next a standard Ethernet header 2c, 3c, 4c is added to each respective fragment 2a, 3a, 4a. Using the fragment obtained together with the associated Ethernet header, a standard Ethernet packet may be obtained in which each fragment 2a, 3a, 4a occupies the payload part of the Ethernet packet. Additional characters or symbols, as conventionally needed in order to complete the standard Ethernet packet, for example a frame check sequence for controlling errors are also included in an appropriate part of the Ethernet packet. This additional part is represented by reference numerals 2d, 3d, 4d in each packet. The resulting Ethernet packets are shown in figure 3 by reference numerals 2, 3 and 4.

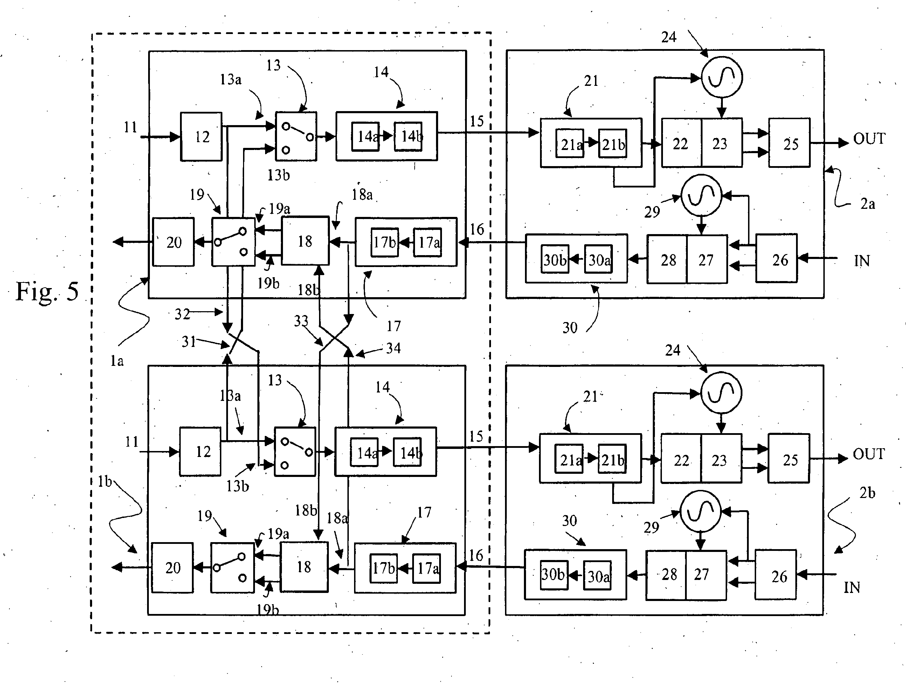

Once the frame is fragmented and numbered, the resulting Ethernet packets are input into a transmission switch 13. The transmission switch 13 is in charge of switching the transmission of the signals, based on pre-established selection criteria - between one input 13a and another input 13b which preferably carries another stream of fragmented and numbered blocks of a frame generated in a second circuit (usually in the same board) of the IDU as will be discussed in relation to figure 5. In figure 1, the transmission switch 13 is in position of transmitting the signal received from input port 13a.

The signal passing through the switch 13 is then fed into an interface block 14 which may contain typical physical layer Ethernet interface elements such as the block represented by reference numeral 14a which may be a PHY transmit device; as well as the block represented by reference numeral 14b which may be a LIU such as a Small Form Factor Pluggable (SFP) interface. In figure 2, the connection link is shown as the output port 15. The operation of these interfaces are already discussed in relation to figure 1.

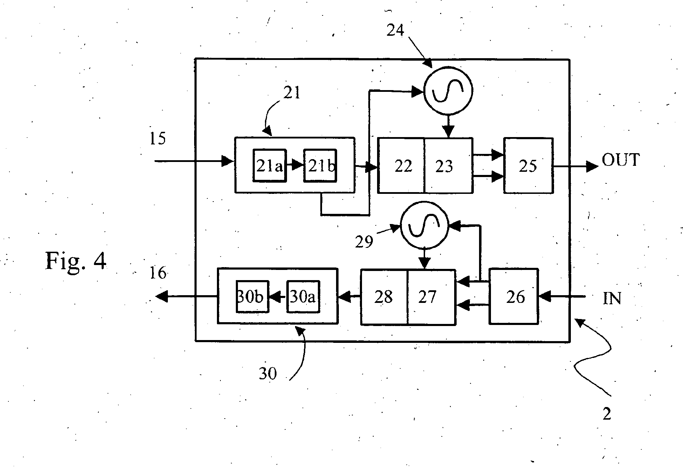

At the reception stage of the IDU, a signal arrives at input port 16. According to the invention the said signal is a stream of fragmented and numbered blocks of a frame initially received by the ODU and fragmented and numbered in the latter unit, as will be described in relation to figures 4. The signal is preferably first input in an interface block 17 which, in a similar manner as in the interface block 14, contains typical physical layer Ethernet interface elements such the block represented by reference numeral 17a which may be a LIU such as a Small Form Factor Pluggable (SFP) interface; as well as the block represented by reference numeral 17b which may be a PHY receipt device. The operation of these interfaces are already discussed in relation to figure 1.

Next the signal is fed into a reception aligner 18. The reception aligner 18 also receives a second input 18b containing a second stream of fragmented and numbered blocks of a frame arriving from the second ODU. The reception aligner is in charge of aligning the two incoming signals at inputs 18a and 18b based on the numbering of fragments in each packet. This is done by introducing delay in these signals such that the corresponding outputs 19a and 19b are aligned. The delay is introduced on the basis of the fragment number of each packet and modulating accordingly the inserted delay so that the fragments with the same number are output at the same time.

Next the two aligned signals 19a and 19b are fed into a reception switch 19. The reception switch 19 is in charge of choosing one of the received signals, based on pre-established selection criteria - between the two inputs 19a and 19b received from the aligner block 18.

In case of degradation of the selected signal, the selection criteria causes the reception switch 19 to switch to the other signal. The switching preferably occurs during a gap between two consecutive packets. The output of the switch 19 is fed into the de-packager 20.

As a result if the packet containing fragment number N (and all the previous packets) were forwarded from input 19a to de-packager 20; after a change is effected, the packet containing fragment number N+1 (and all the following packets) is forwarded from 19b to de-packager 20. Hence, the switching is performed in hitless manner.

It is to be noted that the pre-established selection criteria for switching, mentioned above in relation to transmission switch 13 and reception switch 19, may be different from case to case. One example of a selection criterion could be the quality of the signal received which could be determined by known measures.

The main function of the de-packager 20 is that of terminating the packet received at input port 16 and building back the reception air frame, i.e. the CBR signal based on its original reception clock rate. The operation of the de-packager 20 has already been discussed above in relation to figure 1.

As discussed above, the IDU uses the numbering information as a basis for aligning the blocks coming from two ODUs. This manner of aligning the blocks thus overcomes any possible problem with respect to lack of synchronization between the signals arrived from the two ODUs as it is independent of such lack of synchronization. Therefore, the IDU may select the blocks of the fragmented frame coming from one ODU or the other and is able to perform hitless switching based on known switching criteria.

### OUTDOOR UNIT (ODU)

In figure 4 an exemplary block diagram of an ODU, 2, is shown representing only those parts of the outdoor unit which are considered helpful for a better understanding of the invention, other parts not shown being considered known by a person skilled in the related art. In this figure, the upper line of elements in the block diagram are related to reception of signals from the IDU and transmission of the signals after further processing from the ODU towards an output port thereof. This upper line is hereinbelow referred to as transmission stage. Likewise, the lower line of elements are related to reception at an input port of the ODU and transmission from the latter to the IDU, hereinbelow referred to as the reception stage.

Thus in the transmission stage of figure 4, reference numeral 15 represents an input port through which a signal from the IDU 1 is input to the ODU 2 (which is the same port 15 in figure 2 from which the IDU outputs the signals). As discussed in relation to figure 2, this input signal comprises a stream of fragmented and numbered blocks of the frame to be transmitted, structured in standard Ethernet packets.

The input signal is preferably fed into an interface block 21, which may contain typical physical layer Ethernet interface elements such the block represented by reference numeral 21a which may be a LIU such as a Small Form Factor Pluggable (SFP) interface; as well as the block represented by reference numeral 21 b which may be the so-called PHY receipt device (including a clock data recovery device) as already identified further above in relation to figure 1.

In the next step, the input signal is fed into a de-packager 22, the function of which is that of terminating the fragments received within the Ethernet packets, and build back transmission air frame (being the CBR) at the transmission original clock rate.

The fragments are then input into a buffer 23. The buffer 23 reads and transmits the signals based on a clock reference generated by clock generator 24. As already mentioned in relation to figure 1, the rate of the clock generator 24 is locked to the transmission Ethernet clock provided by the clock data recovery device 21 b, said clock being in turn locked to the transmission original clock rate. Hence the buffer 23 outputs the bits of the transmission air frame (CBR) at transmission original clock rate as generated at the IDU.

Therefore, the terminated signal for transmission over the air has the same bit rate as that of the original signal at the input 11 of the IDU. The signal is then fed into a modulator 25 in order to modulate the transmission air frame, i.e. CBR, into a signal ready for transmission as output port OUT.

At the reception stage of the ODU, an input signal is fed from the input port IN into a demodulator 26 where the received signal is demodulated. The input signal is a CBR, referred to as reception air frame.

Next the signal is fed into a packager 27. The packager 27 has the same function as the packager 12 discussed in relation to figure 2 which is that of breaking the air frame into fragments and numbering each fragment in an analogous manner as that shown in figure 2.

These fragments are clocked by a clock reference generated by a clock generator 29 which is locked to the original clock of the air frame signal transmitted from a remote ODU. Next the fragmented and numbered blocks are input to an insertion block 28 where said blocks are inserted into the payload of standard Ethernet packets in order to be further transmitted to the IDU 1.

Preferably before outputting from the ODU 2, the signal passes through an interface block 30 which, in a similar manner as other interface blocks discussed above, contains typical physical layer Ethernet interface elements such as the so-called PHY transmit device 30a as well as a LI U such as for example a Small Form Factor Pluggable (SFP) interface represented by reference numeral 30b, as already identified further above in relation to figure 1.

The signal is then output at the output port 16 which is the same input port 16 as represented in relation to figure 2. The subsequent procedures applied to the signal are those already discussed at the reception stage as discussed in relation to figure 2.

Figure 5 is a schematic block diagram representation of an exemplary combination of indoor units and outdoor units suitable for use in accordance with the present invention. As shown on the left hand side of the figure, two interface circuits (boards), represented by 1 a and 1 b, are shown in the same IDU unit which are used in connection to two ODUs, 2a and 2b, which are shown on the right hand side thereof.

The use of two complete interface circuits (boards) in IDUs is optional, as one IDU board, 1a, is sufficient for carrying out the protection switching proposed by the invention. The second IDU board, 1b, may serve for performing additional protection against hardware failure as a spare unit, which may be put into operation in case it is deemed desirable. Figure 5, shows the two IDU boards for the sake of illustration and not in a limiting manner.

The operation of the IDU and ODUs are those already discussed above in relation to figures 2 and 4 respectively. In figure 5, like elements are given like reference numerals as those of figures 2 and 4, except for the two IDUs which are given reference numerals 1 a and 1b and the two ODUs which are given reference numerals 2a and 2b. In this figure however, the switching operation may be more clearly appreciated.

In transmission stage within the IDU board 1a, the transmission switch 13 receives at a first input 13a, a first stream of fragmented and numbered blocks coming from the packager 12 of the first IDU, 1 a. Similarly, the transmission switch 13 receives at a second input 13b, a second stream of fragmented and numbered blocks coming from the packager 12 of the second IDU board, 1b. This second stream of blocks passes from the packager 12 of the second IDU board, 1b, to input 13b of the transmission switch 13 of the first IDU board, 1 a, by traveling through the connection link 31. The transmission switch 13, then switches from input 13a to 13b, or vice-versa, based on pre-established selection criteria.

In the case where no protection against hardware failure is implemented, only one IDU board, say 1a, is used. The link 31 does not carry any signal towards the transmission switch 13, and thus the latter remains in a position in which only input 13a is enabled (where eventually it may be replaced by a fixed connection).

In reception stage and still referring to figure 5 using two IDU boards, a reception switch 19 is present in each of the two IDU boards 1 a, and 1b. Referring for example to the reception switch 19 of the upper IDU board, 1a, a first input 19a of the reception switch 19 receives a first stream of fragmented and numbered blocks coming from the first ODU, 2a (after passing through the interface block 17 and aligner 18 in the first IDU board, 1a). Similarly, the reception switch 19 receives at a second input 19b, a second stream of fragmented and numbered blocks coming from the second ODU, 2b, (after passing through the interface block 17 and aligner 18 in the second IDU, 1b). This second stream of blocks passes from the second ODU, 2b, to the reception switch 19 of the first IDU board, 1a, by traveling through the connection link 34. The reception switch 19, then switches from input 19a to 19b, or vice-versa, based on pre-established selection criteria.

It is to be noted that for the operation of the reception switch 19 in order to choose from one input port 19a to another 19b, or vice-versa, the presence of a second IDU board, 1b, is irrelevant. All is needed is that the two input signals arrives at each input port 19a and 19b.

Furthermore, it is clearly appreciated that when for example the first IDU board 1 a is used, the interface elements 17 need not be incorporated inside the second IDU board, 1 b. Thus, although in figure 1b, the interface elements 17 are shown to be within the second IDU board, it is understood that these interface elements 17 may be used without using a second IDU board.

Thus, in case only one IDU board, say 1a, is used, the link 34 carries a signal from the output 16 of the second ODU, 2b, towards the second input 19b of the reception switch 19, and thus the latter may switch from one input to another.

In the next step, the received signal which is still in form of standard Ethernet packets is de-packaged in the de-packager 20 and the numbered blocks are maintained aligned based on their numbering. In this manner the IDU, 1a, is capable of choosing from one or the other stream of blocks and as these blocks are maintained aligned based on their numbering order, hitless switching may be easily performed.

Similar discussion may be provided, by analogy, for the case where instead of the first IDU, 1a, the second IDU, 1b, is used. Thus further description of this case is considered not necessary. In such case however, the connection link 32 would have similar function as that of connection link 31, and connection link 33 would have similar function as that of connection link 34.

## Claims

1. Method of protection switching in a radio communication system, the system having an indoor unit (1, 1a, 1b) and at least two outdoor units (2, 2a, 2b), the indoor unit (1, 1a, 1b) and the at least two outdoor units (2, 2a, 2b) being adapted for using constant bit rate signals, said constant bit rate signals having frames (1) and the indoor unit (1, 1a, 1b) communicating with each of the at least two outdoor units (2, 2a, 2b) using Ethernet transmission,
**characterized in that** the Ethernet transmission is made using Ethernet packets (2, 3, 4), each of said Ethernet packets (2, 3, 4) containing a numbered fragment (2a, 3a, 4a) of one of said frames (1) of the constant bit rate signal, and **in that** protection switching is performed based on an alignment of said Ethernet packets (2, 3, 4) using said numbered fragments (2a, 3a, 4a).

2. Method according to claim 1, further comprising the steps of:
- fragmenting one of said frames (1) of data information into blocks of fragments (2a, 3a, 4a),
- numbering (2b, 3b, 4b)said fragments (2a, 3a, 4a),
- including the numbered fragments (2a, 3a, 4a) in a payload of one of said Ethernet packets (2, 3, 4), and
- transmitting said one of said Ethernet packets (2, 3, 4) from the indoor unit (1, 1a, 1b) to each of said at least two outdoor units (2, 2a, 2b), or from each of said at least two outdoor units (2, 2a, 2b) to the indoor unit (1, 1a, 1b) based on a clock rate locked to an original clock rate of said one of said frames (1).

3. Method according to claim 1 or 2, wherein in a transmission stage:
- said one of said frames (1) is generated in said indoor unit (1, 1a, 1b); and
- said Ethernet packets (2, 3, 4) are transmitted to each of said at least two outdoor units (2, 2a, 2b).

4. Method according to any one of the previous claims, wherein in a reception stage:
- said Ethernet packets (2, 3, 4),are input from each of said at least two outdoor units (2, 2a, 2b) to said indoor unit (1, 1 a, 1b) which aligns said Ethernet packets (2, 3, 4) using the numbering (2b, 3b, 4b) of the fragments (2a, 3a, 4a), and
- the aligned Ethernet packets (2, 3, 4) are selected according to predetermined selection criteria for performing hitless switching.

5. System of protection switching in a radio communication system, the system having an indoor unit (1, 1a, 1b) and at least two outdoor units (2, 2a, 2b), the indoor unit (1, 1a, 1b) and the at least two outdoor units (2, 2a, 2b) being adapted for using constant bit rate signals said constant bit rate signals having frames (1) and the indoor unit (1, 1a, 1 b) being connected to each of the at least two outdoor units (2, 2a, 2b) using an Ethernet interface for performing an Ethernet transmission,
**characterized in that** the Ethernet transmission comprises Ethernet packets (2, 3, 4), each of said Ethernet packets (2, 3, 4) containing a numbered fragment (2a, 3a, 4a) of one of said frames (1) of the constant bit rate signal, and **in that** the system comprises an aligner (18) for aligning said Ethernet packets (2, 3, 4) using said numbered fragments (2a, 3a, 4a) and a switch (19) adapted for switching based on said alignment.

6. System according to claim 5 ,wherein the system comprises:
- means (12) for fragmenting one of said frames (1) of data information into blocks of fragments (2a, 3a, 4a) and numbering (2b, 3b, 4b) said fragments (2a, 3a, 4a),
- means (12) for including the numbered fragments (2a, 3a, 4a) in a payload of said Ethernet packets (2, 3, 4), and
- means for transmitting said Ethernet packets (2, 3, 4) from said indoor unit (1, 1a, 1b) to each of said at least two outdoor units (2, 2a, 2b), or from each at least two outdoor units (2, 2a, 2b) to the indoor unit (1, 1a, 1b) based on a clock rate generated by a clock generator locked to an original clock rate of said one of said frames (1).

7. System according to claim 5 or 6, wherein two indoor units (1a, 1b) are used in Ethernet connection with two outdoor units (2a, 2b).

8. An indoor unit (1, 1a, 1b) for use in any of the systems of claim 5-7, comprising a packager (12) for fragmenting a frame (1) of data information into blocks of fragments (2a, 3a, 4a), numbering (2b, 3b, 4b) said fragments (2a, 3a, 4a) and including said numbered fragments (2a, 3a, 4a) into an Ethernet packet (2, 3, 4); a transmission switch (13) for switching from one of said Ethernet packets (2, 3, 4) to be transmitted to another; an aligner (18) for aligning two received Ethernet packets (2, 3, 4) based on said numbered fragments (2a, 3a, 4a), a reception switch (19) for switching from one received Ethernet packet (2, 3, 4) to another, a de-packager (20) for breaking the Ethernet packet (2, 3, 4) received into fragments (2a, 3a, 4a) and building a frame (1) with said fragments (2a, 3a, 4a).

9. An outdoor unit (2, 2a, 2b) for use in any of the systems of claim 5-7, comprising a de-packager (22) for breaking at least one Ethernet packet (2, 3, 4) received and building at least one frame (1); a buffer memory (23) for storing said at least one frame (1), a packager (27) for fragmenting said at least one frame (1) of data information received into blocks of fragments (2a, 3a, 4a) and numbering (2b, 3b, 4b) said fragments (2a, 3a, 4a); an insertion block (28) for inserting said fragments (2a, 3a, 4a) into the payload of said Ethernet packets.

## Patentansprüche

1. Verfahren zum Ersatzschalten in einem Funkkommunikationssystem, wobei das System eine Inneneinheit (1, 1a, 1b) und mindestens zwei Außeneinheiten (2, 2a, 2b) umfasst, wobei die Inneneinheit (1, 1a, 1b) und die mindestens zwei Außeneinheiten (2, 2a, 2b) fähig sind, Signale mit konstanter Bitrate zu benutzen, wobei die besagten Signale mit konstanter Bitrate Rahmen (1) haben und die Inneneinheit (1, 1a, 1b) über eine Ethernet-Übertragung mit einer jeden der mindestens zwei Außeneinheiten (2, 2a, 2b) kommuniziert,
**dadurch gekennzeichnet, dass** die Ethernet-Übertragung unter Verwendung von Ethernet-Paketen (2, 3, 4) erfolgt, wobei ein jedes der besagten Ethernet-Pakete (2, 3, 4) ein nummeriertes Fragment (2a, 3a, 4a) eines der besagten Rahmen (1) des Signals mit konstanter Bitrate enthält, und dass das Ersatzschalten auf der Basis einer Abgleichung der besagten Ethernet-Pakete (2, 3, 4) unter Verwendung der besagten nummerierten Fragmente (2a, 3a, 4a) erfolgt.

2. Verfahren nach Anspruch 1, weiterhin die folgenden Schritte umfassend:
- Fragmentieren eines der besagten Datenrahmen (1) in Fragmentblöcke (2a, 3a, 4a),
- Nummerieren (2b, 3b, 4b) der besagten Fragmente (2a, 3a, 4a),
- Einfügen der nummerierten Fragmente (2a, 3a, 4a) in die Nutzdaten eines der besagten Ethernet-Pakete (2, 3, 4), und
- Übertragen des einen der besagten Ethernet-Pakete (2, 3, 4) von der Inneneinheit (1, 1a, 1b) an eine jede der besagten mindestens zwei Außeneinheiten (2, 2a, 2b), oder von einer jeden der besagten mindestens zwei Außeneinheiten (2, 2a, 2b) an die Inneneinheit (1, 1a, 1b) auf der Basis einer Taktfrequenz, welche auf eine ursprüngliche Taktfrequenz des besagten einen der besagten Rahmen (1) festgelegt ist.

3. Verfahren nach Anspruch 1 oder 2, wobei in einer Übertragungsstufe:
- Der besagte eine der besagten Rahmen (1) in der besagten Inneneinheit (1, 1a, 1b) erzeugt wird; und
- die besagten Ethernet-Pakete (2, 3, 4) an eine jede der besagten mindestens zwei Außeneinheiten (2, 2a, 2b) übertragen werden.

4. Verfahren nach einem beliebigen der vorstehenden Ansprüche, wobei in einer Empfangsstufe:
- Die besagten Ethernet-Pakete (2, 3, 4) von einer jeden der besagten mindestens zwei Außeneinheiten (2, 2a, 2b) in die besagte Inneneinheit (1, 1a, 1b), welche die besagten Ethernet-Pakete (2, 3, 4) unter Verwendung der Nummerierung (2b, 3b, 4b) der Fragmente (2a, 3a, 4a) abgleicht, eingespeist werden, und
- die abgeglichenen Ethernet-Pakete (2, 3, 4) gemäß der vorgegebenen Auswählkriterien für das Ausführen des unterbrechungsfreien Umschaltens ausgewählt werden.

5. System zum Ersatzschalten in einem Funkkommunikationssystem, wobei das System eine Inneneinheit (1, 1a, 1b) und mindestens zwei Außeneinheiten (2, 2a, 2b) umfasst, wobei die Inneneinheit (1, 1a, 1b) und die mindestens zwei Außeneinheiten (2, 2a, 2b) fähig sind, Signale mit konstanter Bitrate zu benutzen, wobei die besagten Signale mit konstanter Bitrate Rahmen (1) haben und die Inneneinheit (1, 1a, 1b) unter Verwendung einer Ethernet-Schnittstelle zum Ausführen einer Ethernet-Übertragung mit einer jeden der mindestens zwei Außeneinheiten (2, 2a, 2b) verbunden ist,
**dadurch gekennzeichnet, dass** die Ethernet-Übertragung Ethernet-Pakete (2, 3, 4) umfasst, wobei jedes der besagten Ethernet-Pakete (2, 3, 4) ein nummeriertes Fragment (2a, 3a, 4a) eines der besagten Rahmen (1) des Signals mit konstanter Bitrate enthalten, und dass das System eine Abgleichvorrichtung (18) zum Abgleichen der besagten Ethernet-Pakete (2, 3, 4) unter Verwendung der besagten nummerierte Fragmente (2a, 3a, 4a), sowie eine Schaltvorrichtung (19), welche fähig ist, das Umschalten auf der Basis der besagten Abgleichung durchzuführen, umfasst.

6. System nach Anspruch 5, wobei das System umfasst:
- Mittel (12) zum Fragmentieren eines der besagten Datenrahmen (1) in Fragmentblöcke (2a, 3a, 4a), und zum Nummerieren (2b, 3b, 4b) der besagten Fragmente (2a, 3a, 4a),
- Mittel (12) zum Einfügen der nummerierten Fragmente (2a, 3a, 4a) in die Nutzdaten der besagten Ethernet-Pakete (2, 3, 4), und
- Mittel zum Übertragen der besagten Ethernet-Pakete (2, 3, 4) von der besagten Inneneinheit (1, 1a, 1b) an eine jede der besagten mindestens zwei Außeneinheiten (2, 2a, 2b), oder von einer jeden der mindestens zwei Außeneinheiten (2, 2a, 2b) an die Inneneinheit (1, 1a, 1b) auf der Basis einer von einem Taktgenerator erzeugten Taktfrequenz, welche auf eine ursprüngliche Taktfrequenz des besagten einen der besagten Rahmen (1) festgelegt ist.

7. System nach Anspruch 5 oder 6, wobei zwei Inneneinheiten (1a, 1b) in einer Ethernet-Verbindung mit zwei Außeneinheiten (2a, 2b) verwendet werden.

8. Eine Inneneinheit (1, 1a, 1b) zur Verwendung in einem beliebigen der Systeme gemäß den Ansprüchen 5-7, umfassend eine Verpackvorrichtung (12) zum Fragmentieren eines Datenrahmens (1) in Fragmentblöcke (2a, 3a, 4a), zum Nummerieren (2b, 3,b, 4b) der besagten Fragmente (2a, 3a, 4a) und Einfügen der besagten nummerierten Fragmente (2a, 3a, 4a) in ein Ethernet-Paket (2, 3, 4); einen Übertragungsschalter (13) zum Umschalten von einem der besagten zu übertragenden Ethernet-Pakete (2, 3, 4) auf ein anderes; eine Abgleichvorrichtung (18) zum Abgleichen von zwei empfangenen Ethernet-Paketen (2, 3, 4) auf der Basis der besagten nummerierten Fragmente (2a, 3a, 4a), einen Empfangsschalter (19) zum Umschalten von einem empfangenen Ethernet-Paket (2, 3, 4) auf ein anderes, eine Entpackvorrichtung (20) zum Aufteilen der empfangenen Ethernet-Pakete (2, 3, 4) in Fragmente (2a, 3a, 4a) und zum Aufbauen eines Rahmens (1) mit den besagten Fragmenten (2a, 3a, 4a).

9. Eine Außeneinheit(2, 2a, 2b) zur Verwendung in einem beliebigen der Systeme gemäß den Ansprüchen 5-7, umfassend eine Entpackvorrichtung (22) zum Aufteilen mindestens eines empfangenen Ethernet-Pakets (2, 3, 4) und zum Aufbauen mindestens eines Rahmens (1); einen Pufferspeicher (23) zum Speichern des besagten mindestens einen Rahmens (1), eine Verpackvorrichtung (27) zum Fragmentieren des besagten mindestens einen Datenrahmens (1) in Fragmentblöcke (2a, 3a, 4a) und zum Nummerieren (2b, 3b, 4b) der besagten Fragmente (2a, 3a, 4a); einen Einfügeblock (28) zum Einfügen der besagten Fragmente (2a, 3a, 4a) in die Nutzdaten der besagten Ethernet-Pakete.

## Revendications

1. Procédé de commutation de secours dans un système de radiocommunication, le système possédant une unité intérieure (1, 1a, 1b) et au moins deux unités extérieures (2, 2a, 2b), l'unité intérieure (1, 1a, 1b) et les au moins deux unités extérieures (2, 2a, 2b) étant adaptées pour utiliser des signaux à débit binaire constant, lesdits signaux à débit binaire constant possédant des trames (1) et l'unité intérieure (1, 1a, 1b) communiquant avec chacune des au moins deux unités extérieures (2, 2a, 2b) au moyen d'une transmission Ethernet,
**caractérisé en ce que** la transmission Ethernet est réalisée en utilisant des paquets Ethernet (2, 3, 4), chacun desdits paquets Ethernet (2, 3, 4) contenant un fragment numéroté (2a, 3a, 4a) d'une desdites trames (1) du signal à débit binaire constant, et **en ce que** la commutation de secours est exécutée sur la base d'un alignement desdits paquets Ethernet (2, 3, 4) en utilisant lesdits fragments numérotés (2a, 3a, 4a).

2. Procédé selon la revendication 1, comprenant en outre les étapes de :
- la fragmentation de l'une desdites trames (1) d'information de données en blocs de fragments (2a, 3a, 4a),
- la numérotation (2b, 3b, 4b) desdits fragments (2a, 3a, 4a),
- l'inclusion des fragments numérotés (2a, 3a, 4a) dans des données utiles de l'un desdits paquets Ethernet (2, 3, 4), et
- la transmission dudit un desdits paquets Ethernet (2, 3, 4) de l'unité intérieure (1, 1a, 1b) à chacune desdites au moins deux unités extérieures (2, 2a, 2b), ou de chacune desdites au moins deux unités extérieures (2, 2a, 2b) à l'unité intérieure (1, 1a, 1b) sur la base d'une fréquence d'horloge bloquée sur une fréquence d'horloge originale de l'une desdites trames (1).

3. Procédé selon la revendication 1 ou 2, dans lequel, lors d'une étape de transmission :
- ladite une desdites trames (1) est générée dans ladite unité intérieure (1, 1a, 1b) ; et
- lesdits paquets Ethernet (2, 3, 4) sont transmis à chacune desdites au moins deux unités extérieures (2, 2a, 2b).

4. Procédé selon l'une quelconque des revendications précédentes, dans lequel, lors d'une étape de réception :
- lesdits paquets Ethernet (2, 3, 4) sont entrés depuis chacune desdites au moins deux unités extérieures (2, 2a, 2b) sur ladite unité intérieure (1, 1a, 1b) qui aligne lesdits paquets Ethernet (2, 3, 4) en utilisant la numérotation (2b, 3b, 4b) des fragments (2a, 3a, 4a), et
- les paquets Ethernet alignés (2, 3, 4) sont sélectionnés en fonction de critères de sélection prédéterminés de manière à exécuter une commutation sans heurts.

5. Système de commutation de secours dans un système de radiocommunication, le système possédant une unité intérieure (1, 1a, 1b) et au moins deux unités extérieures (2, 2a, 2b), l'unité intérieure (1, 1a, 1b) et les au moins deux unités extérieures (2, 2a, 2b) étant adaptées pour utiliser des signaux à débit binaire constant, lesdits signaux à débit binaire constant possédant des trames (1) et l'unité intérieure (1, 1a, 1b) étant connectée à chacune des au moins deux unités extérieures (2, 2a, 2b) via une interface Ethernet afin de réaliser une transmission Ethernet,
**caractérisé en ce que** la transmission Ethernet comprend des paquets Ethernet (2, 3, 4), chacun desdits paquets Ethernet (2, 3, 4) contenant un fragment numéroté (2a, 3a, 4a) de l'une desdites trames (1) du signal à débit binaire constant, et **en ce que** le système comprend un dispositif d'alignement (18) destiné à aligner lesdits paquets Ethernet (2, 3, 4) en utilisant lesdits fragments numérotés (2a, 3a, 4a) et un commutateur (19) adapté pour une commutation sur la base dudit alignement.

6. Système selon la revendication 5, dans lequel le système comprend :
- des moyens (12) pour fragmenter l'une desdites trames (1) d'information de données en blocs de fragments (2a, 3a, 4a) et numéroter (2b, 3b, 4b) lesdits fragments (2a, 3a, 4a),
- des moyens (12) pour inclure les fragments numérotés (2a, 3a, 4a) dans des données utiles desdits paquets Ethernet (2, 3, 4), et
- des moyens pour transmettre lesdits paquets Ethernet (2, 3, 4) de l'unité intérieure (1, 1a, 1b) à chacune desdites au moins deux unités extérieures (2, 2a, 2b), ou de chacune desdites au moins deux unités extérieures (2, 2a, 2b) à l'unité intérieure (1, 1a, 1b) sur la base d'une fréquence d'horloge générée par un générateur d'horloge bloquée sur une fréquence d'horloge originale de l'une desdites trames (1).

7. Système selon la revendication 5 ou 6, dans lequel deux unités intérieures (1a, 1b) servent à la connexion Ethernet avec deux unités extérieures (2a, 2b).

8. Unité intérieure (1, 1a, 1b) à utiliser dans l'un quelconque des systèmes des revendications 5 à 7, comprenant un intégrateur (12) destiné à fragmenter une trame (1) d'information de données en blocs de fragments (2a, 3a, 4a), à numéroter (2b, 3b, 4b) lesdits fragments (2a, 3a, 4a) et à inclure lesdits fragments numérotés (2a, 3a, 4a) dans un paquet Ethernet (2, 3, 4) ; un commutateur de transmission (13) destiné à commuter de l'un desdits paquets Ethernet (2, 3, 4) à transmettre à un autre ; un dispositif d'alignement (18) destiné à aligner deux paquets Ethernet reçus (2, 3, 4) sur la base desdits fragments numérotés (2a, 3a, 4a), un commutateur de réception (19) destiné à commuter d'un paquet Ethernet reçu (2, 3, 4) à un autre, un dés-intégrateur (20) destiné à casser le paquet Ethernet (2, 3, 4) reçu en fragments (2a, 3a, 4a) et à construire une trame (1) avec lesdits fragments (2a, 3a, 4a).

9. Unité extérieure (2, 2a, 2b) à utiliser dans l'un quelconque des systèmes des revendications 5 à 7, comprenant un dés-intégrateur (22) destiné à casser au moins un paquet Ethernet (2, 3, 4) reçu et à construire au moins une trame (1) ; une mémoire tampon (23) destinée à stocker ladite au moins une trame (1), un intégrateur (27) destiné à fragmenter ladite au moins une trame (1) d'information de données reçue en blocs de fragments (2a, 3a, 4a) et à numéroter (2b, 3b, 4b) lesdits fragments (2a, 3a, 4a) ; un bloc d'insertion (28) destiné à insérer lesdits fragments (2a, 3a, 4a) dans les données utiles desdits paquets Ethernet.
